# EUROPEAN PATENT APPLICATION

(11) **EP 2 273 593 A2**
(43) Date of publication of application: **12.01.2011**
(21) Application number: 10012866.9
(22) Date of filing: 09.07.2004
(51) Int. Cl.: H01M 8/02, H01M 8/24

(54) **Sealing structure for sealing separator plates of fuel cell modules**

(30) Priority: 29.12.2003 CN 200310121596
(62) Divisional of application: 04016256.2
(71) Applicant: Asia Pacific Fuel Cell Technologies, Ltd., Chunan, Miaoli 350 (TW)
(72) Inventor: Ys Yang, Jefferson, CA 92869 (US)
(74) Representative: Goddar, Heinz J.

(57) **Abstract**

A sealing structure for sealing a proton exchange membrane fuel cell is disclosed. The fuel cell includes a membrane electrode assembly, an anode plate, and a cathode plate. Both of the plates are formed with a peripheral groove and an extended groove at a circumferential portion thereof, and silicon rubber is applied to the peripheral groove and the extended groove. Before the silicon rubber is cured, the anode plate, the membrane electrode assembly and the cathode plate are stacked and compressed with a predetermined compression pressure, such that the silicon rubber at the peripheral groove of the anode plate binds correspondingly to the silicon rubber at the peripheral groove of the cathode plate to form a tight sealing at the circumferential portions between the anode plate and the cathode plate, and the membrane electrode assembly is tightly sandwiched between the silicon rubber at the extended groove of the anode plate and the silicon rubber at the extended groove of the cathode plate to form a tight sealing around the ports between the anode plate and cathode plate.

## Description

### BACKGROUND OF THE INVENTION

1. Field of the Invention

The present invention relates to a proton exchange membrane fuel cell, particularly to a sealing structure for sealing single fuel cell and stacked fuel cell module.

2. Description of the Prior Art

In the field of fuel cell technology, fuel cell is classified based on the electrolyte thereof. There are approximately five kinds of fuel cells which have been developed, namely, proton exchange membrane fuel cell or polymer electrolyte membrane fuel cell, abbreviated as PEMFC, alkaline fuel cell (AFC), phosphoric acid fuel cell (PAFC), molten carbonate fuel cell (MCFC) and solid oxide fuel cell (SOFC). Each kind of fuel cell has its own advantages, disadvantages and extent of applications. Among these known fuel cells, the PEMFC would be the most competitive power supply and has high practical value.

Principally, a fuel cell is directed to use hydrogen and oxygen to proceed with electrochemical reactions to produce water and release electrical energy, which can be basically considered a reverse device of water electrolysis.

The performance of fuel cell mainly depends on the extent of the electrochemical reaction, which is affected by the materials forming the layers of the fuel cell and the sealing between the plates. Hence, the selections of the materials and prevention of leakage between the layers will be the important factors of the performance of the fuel cell operations.

However, although much effort has been put to settle the aforesaid problems, the result is not satisfied. Generally speaking, there are two reasons adversely affecting the precise control: one is a failure to efficiently perform the leak and pollution proof functions between the anode and cathode bipolar plates, and the other is a failure to properly control the conductive compression pressure between each layer under an optimal status.

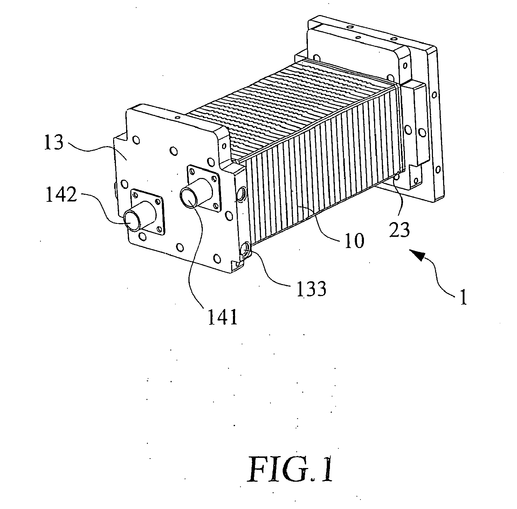

Please refer to **Fig. 1** which shows a cross-sectional view of the single cell of a prior art PEMFC. As shown, the single cell is constituted by an anode plate **101** and a cathode plate **102.** Basically, an anode gas diffusion layer **104** and a cathode gas diffusion layer **105** are separately provided on the two sides of a proton exchange membrane (PEM) **103,** forming a membrane electrode assembly (MEA). The MEA is mounted between the anode plate **101** and the cathode plate **102.**

The inner surface of the anode plate **101** facing the MEA is formed with a plurality of anode gas channels **101a,** and the inner surface of the cathode plate **102** facing the MEA is formed with a plurality of cathode gas channels **102a.** The anode plate **101** and cathode plate **102** are separately provided with gaskets **106, 107** along edge portions thereof. The n, the MEA is disposed on a central portion of the anode plate **101** and cathode plate **102,** forming a gastight single cell.

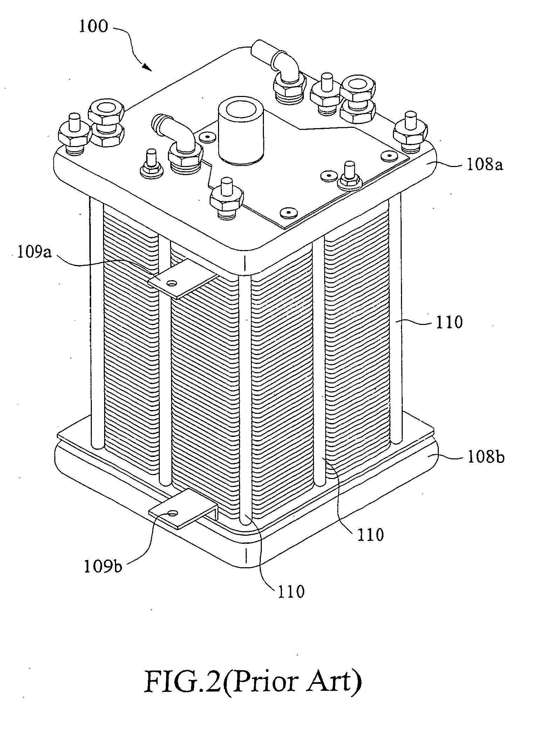

Practically, a plurality of such single cells are stacked to configure a fuel cell stack as shown in **Fig. 2****.** After the connections of plural manifolds or through holes adapted to supply gases and coolant and the dispositions of an upper end plate **108a** and a lower end plate **108b,** together with the conductive terminals **109a, 109b,** the complete fuel cell stack is able to perform the desired conductive reactions under a predetermined compression pressure by fastening a plurality of tie rods **110** therethrough.

However, this construction for the fuel cell will result in the following problems:

(1) The hydrogen supplied from the channels **101**a of the anode plate **101** tends to leak out due to the gaps between the gasket **106** and the anode plate **101.** Meanwhile, the oxygen or air supplied from the channels **102a** of the cathode plate **102** also tends to leak out due to the gaps between the gasket **107** and the cathode plate **102.** The leakage of hydrogen and oxygen significantly affects the electrochemical reactions of the fuel cell. This disadvantageous phenomenon will be extremely obvious after a considerable duration of using the gaskets **106, 107.** Integral formation of those gaskets **106, 107** into a single gasket may improve the situation, but it cannot thoroughly solve the problem.

(2) Due to the property of the materials employed for the gaskets 106, 107 and the different aging rates of the gaskets, the compression pressure at the region of the gaskets is uneven, and hence the compression pressure in the whole fuel cell becomes uneven. This is why the reaction gases often fail to diffuse uniformly, which is a severe block to the conductivity of a PEMFC. Furthermore, because the whole PEMFC relies on the tie rods 110 disposed circumferentially to control its compression pressure, the pressure of the circumferential portion is significantly different from that of the central portion, which will adversely affect the operational effects of the fuel cell.

(3) Utilizing a gasket between the plates fails to efficiently isolate pollution and fails to properly locate each layer in position. Further, because it is difficult to control in advance the compression pressure at an optimal range, it is not possible to pre-prepare a stock of the single cells in the modulized form to proceed with any of the possible types of tests for the purposes of cost reduction and mass production. This is really the key factor of the failure to widely and effectively apply PEMFCs in the industry nowadays.

Accordingly, to provide a highly efficient, mass-producible and cost-saving modulized single cell and cell module to solve the above-mentioned problems and further supply breakthrough ideas in manufacturing the PEMFC is a common desire of people skilled in this field.

### SUMMARY OF THE INVENTION

The primary objective of this invention is to provide a single cell of a fuel cell, particularly a single cell of a PEMFC or a module thereof assembled by the single cells, by means of modulizing and unitizing the cell and module, to simplify the manufacturing process of a PEMFC. Because it is possible to test the performance of each single cell or module in advance according to this invention, the quality of the whole fuel cell is significantly improved and the manufacturing cost thereof is reduced to a mass production scale, thereby practically replacing the existing energy.

Another objective of this invention is to provide a sealing structure for a fuel cell assembled by a plurality of modulized single cells or modules. By means of dispensing a desired amount of silicon rubber between the circumferential portions of the anode plate and cathode plate, the two plates and the MEA sandwiched therebetween can be well positioned in a cushioned manner and can be controlled under a predetermined compression pressure in advance before the silicon rubber is cured, thereby ensuring that a high quality single cell and module is obtained.

Yet a further object of this invention is to provide a single cell of a fuel cell or a module comprising the single cells with excellent gastight effect. By means of dispensing silicon rubber between plates, the leakage of the gases and liquid guided through the channels on the plates can therefore be avoided.

To achieve the above objects, in accordance with the present invention, there is provided a sealing structure for sealing a proton exchange membrane fuel cell. The fuel cell includes a membrane electrode assembly, an anode plate, and a cathode plate. Both of the plates are formed with a peripheral groove and an extended groove at a circumferential portion thereof, and silicon rubber is applied to the peripheral groove and the extended groove. Before the silicon rubber is cured, the anode plate, the membrane electrode assembly and the cathode plate are stacked and compressed with a predetermined compression pressure, such that the silicon rubber at the peripheral groove of the anode plate binds correspondingly to the silicon rubber at the peripheral groove of the cathode plate to form a tight sealing at the circumferential portions between the anode plate and the cathode plate, and the membrane electrode assembly is tightly sandwiched between the silicon rubber at the extended groove of the anode plate and the silicon rubber at the extended groove of the cathode plate to form a tight sealing around the ports between the anode plate and cathode plate.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**Fig. 1** is a schematic view showing a cross-section of the single cell of a prior art fuel cell;

**Fig. 2** is a perspective view of an assembled prior art fuel cell stack;

**Fig. 3** is a schematic view showing a cross-section of a modulized single cell of a fuel cell according to the present invention;

**Fig. 4** is an exploded view showing the components of the single cell of **Fig. 3****;**

**Figs. 5A** to **5D** are cross-sectional views showing the assembly of the single cell according to a first embodiment of the present invention;

**Figs. 6A** to **6B** are cross-sectional views showing the stacking of two single cells of **Fig. 5D** to form a fuel cell module in accordance with a second embodiment of the present invention;

**Figs. 7A** to **7D** are cross-sectional views showing the assembly of the cell module according to a third embodiment of the present invention; and

**Figs. 8A** to **8B** are cross-sectional views showing the stacking of two cell modules of **Fig. 7D** to form a fuel cell stack in accordance with a fourth embodiment of the present invention.

### DETAILED DESCRIPTION OF THE PREFERRED EMBODIMENTS

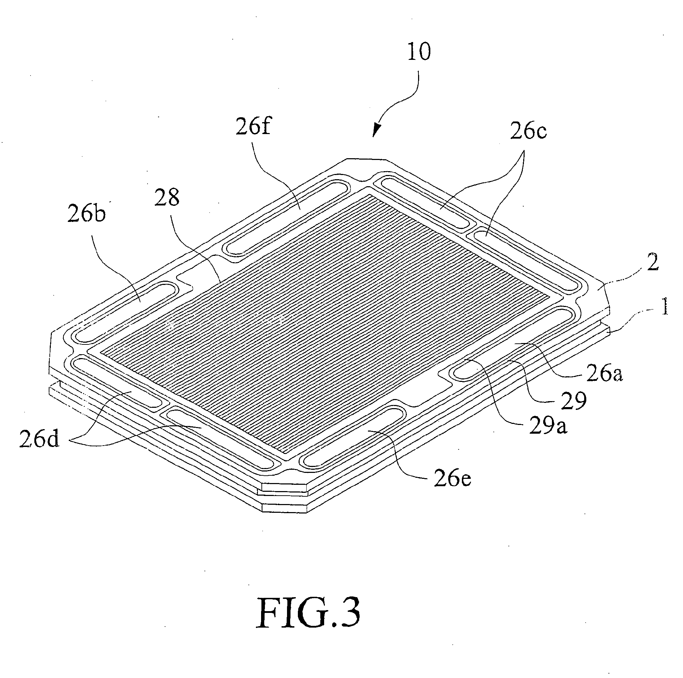

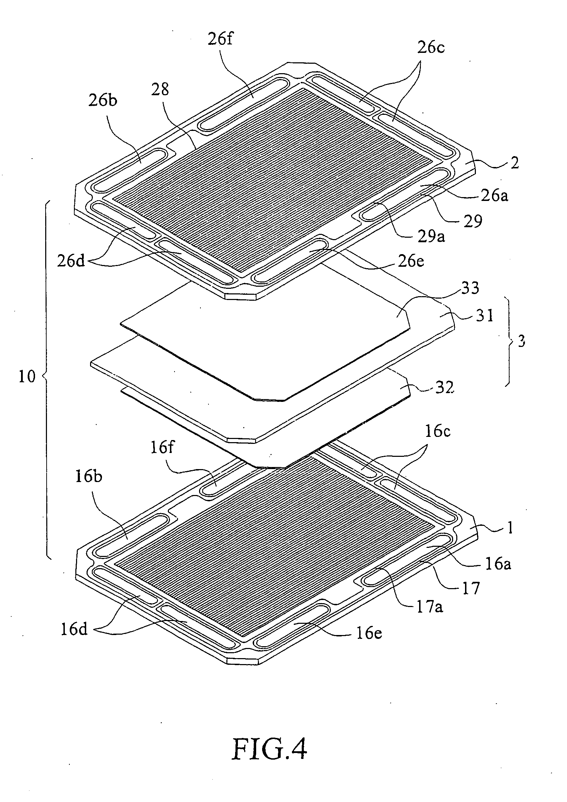

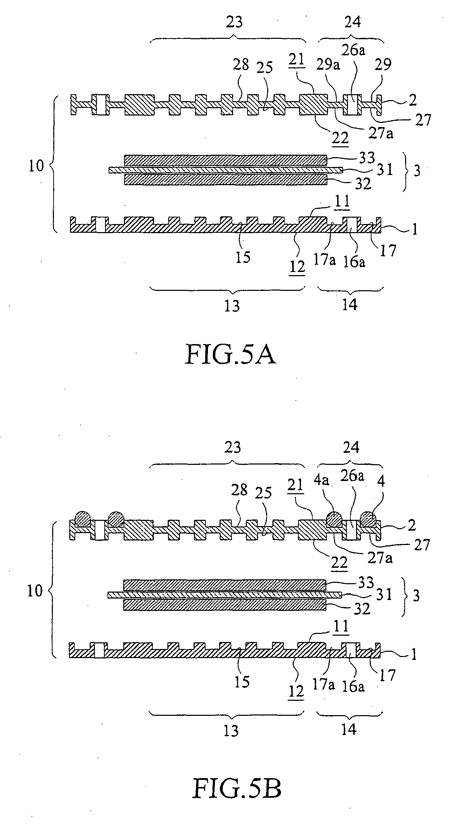

Please refer to the drawings and in particular to **Fig. 3. Fig. 3** shows a modulized single cell **10** of a Proton Exchange Membrane Fuel Cell (PEMFC) according to the present invention. **Fig. 4** is an exploded view showing the components of the modulized single cell **10** and **Fig. 5A** is a cross-sectional view of the components.

Of course, the technical concept is not restricted to a PEMFC. The modulization technology of the subject invention is applicable to any type of fuel cell having similar construction.

The modulized single cell **10** includes an anode plate **1** and a cathode plate **2,** serving as separator plates for the fuel cell. The anode plate **1** has a first surface **11,** a second surface **12,** a central portion **13** and a circumferential portion **14.** The central portion **13** on the first surface **11** is formed with a plurality of anode gas channels **15** having predetermined layout for hydrogen flowing therethrough. The circumferential portion **14** of the anode plate 1 is formed with a hydrogen inlet port **16a,** a hydrogen outlet port **16b,** an air inlet port **16c,** an air outlet port **16d,** a coolant inlet port **16e** and a coolant outlet port **16f.** In the embodiment, the second surface **12** of the anode plate 1 is generally flat in structure.

Similarly, the cathode plate **2** has a first surface **21,** a second surface **22,** a central portion **23** and a circumferential portion **24.** The central portion **23** on the second surface **22** is formed with a plurality of cathode gas channels **25** having predetermined layout for air flowing therethrough. The circumferential portion **24** of the cathode plate **2** is formed with a hydrogen inlet port **26a,** a hydrogen outlet port **26b,** an air inlet port **26c,** an air outlet port **26d,** a coolant inlet port 26e, and a coolant outlet port **26f.**

When the cathode plate **2** is superimposed on the anode plate **1**, the hydrogen inlet port **26a,** the hydrogen outlet port **26b,** the air inlet port **26c,** the air outlet port **26d,** the coolant inlet port **26e,** and the coolant outlet port **26f** at the circumferential portion **24** of the cathode plate **2** are located oppositely and communicated respectively with the hydrogen inlet port **16a,** the hydrogen outlet port **16b,** the air inlet port **16c,** the air outlet port **16d,** the coolant inlet port **16e** and the coolant outlet port **16f** at the circumferential portion **14** of the anode plate **1,** forming passages for flowing of hydrogen, air, and coolant respectively.

A membrane electrode assembly (MEA) **3** is mounted between the anode plate **1** and cathode plate **2.** The MEA **3** has an anode gas diffusion layer (GDL) **32,** a proton exchange membrane (PEM) **31** and a cathode gas diffusion layer (GDL) **33,** that are sequentially stacked and lo.cated between the central portion **13** of the anode plate **1** and the central portion **23** of the cathode plate **2.** An anode catalytic layer (not shown) is coated between the anode GDL **32** and the PEM **31,** and a cathode catalytic layer (not shown) is coated between the PEM **31** and the cathode GDL **33,** such that the hydrogen introduced through the channels **15** of the anode plate **1** and the oxygen introduced through the channels **25** of the cathode plate **2** are adapted to proceed with the reverse reaction of the electrolytic dissociation of water.

The first surface **11** of the circumferential portion **14** of the anode plate **1** is formed with a peripheral groove **17.** Also, an extended groove **17a** is formed in the vicinity of the ports **16a, 16b, 16c, 16d, 16e, 16f** and communicated with the peripheral groove **17.**

Similarly, the second surface **22** of the circumferential portion **24** of the cathode plate **2** facing the anode plate **1** is formed with a peripheral groove **27.** An extended groove **27a** is formed in the vicinity the ports **26a, 26b, 26c, 26d, 26e, 26f** and communicated with the peripheral groove **27.**

In this embodiment, the first surface **21** of the central portion **23** of the cathode plate **2** is also formed with a plurality of coolant channels **28** having predetermined layout for coolant flowing therethrough. The first surface **21** at the circumferential portion **24** of the cathode plate **2** is formed with a peripheral groove **29.** An extended groove **29a** is formed in the vicinity of the ports **26a, 26b, 26c, 26d, 26e, 26f** and communicated with the peripheral groove **29.**

In the assembly of the single cell **10,** appropriate amounts of silicon rubbers **4, 4a** are applied to the peripheral groove **29** and the extended groove **29a** at the first surface 21 of the cathode plate **2** and cured, as shown in **Fig. 5B****.**

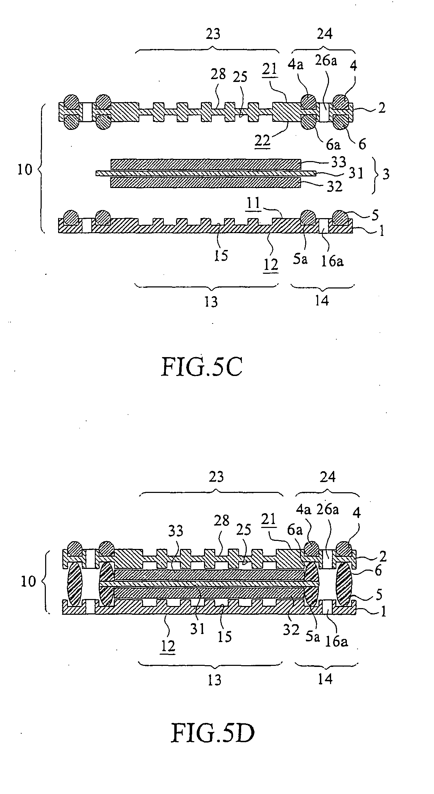

Then, appropriate amounts of silicon rubbers **5, 5a** are applied to the peripheral groove **17** and the extended groove **17a** at the first surface **11** of the circumferential portion **14** of the anode plate **1.** As shown in **Fig. 5C****,** appropriate amounts of silicon rubbers **6, 6a** are also applied to the peripheral groove **27** and extended groove **27a** at the second surface **22** of the circumferential portion **24** of the cathode plate **2.** It is shown in **Fig. 5D** that after the application of the silicon rubbers **5, 5a, 6, 6a** and before the silicon rubbers **5, 5a, 6, 6a** are cured, the membrane electrode assembly **3** is sandwiched precisely between the central portion **13** of the anode plate **1** and the central portion **23** of the cathode plate **2** and the structure is compressed with a predetermined compression pressure. Accordingly, the silicon rubber **5** at the peripheral groove **17** of the anode plate **1** binds to the silicon rubber **6** at the peripheral groove **27** of the cathode plate **2,** forming a tight sealing at the circumferential portion **14** between the anode plate **1** and cathode plate **2.**

Moreover, the PEM **31** of the MEA **3** is adhered by the silicon rubber **5a** at the extended groove **17a** of the anode plate **1** and the silicon rubber **6a** at the extended groove **27a** of the cathode plate **2.** Thereby, the PEM **31** is stably located in position between the anode plate **1** and the cathode plate **2,** and tight sealing are formed around the ports between the anode plate 1 and cathode plate **2** after the silicon rubbers are cured. Thereby, each of the ports **16a, 16b, 16c, 16d, 16e, 16f** at the anode plate **1** is only in communication respectively with the corresponding ports **26a, 26b, 26c, 26d, 26e, 26f** at the cathode plate **2.** Accordingly, a modulized unitary single cell **10** is formed.

By means of the described technology, the single cell **10** is tightly sealed at the circumferential portion. Moreover, the anode plate, MEA and cathode plate are stably positioned and fastened to each other. Sealing is provided between the ports of the anode plate and cathode plate, forming a plurality of separate passages. Thereby, hydrogen gas, oxygen gas and coolant are separately transported and sealed from leakage.

In the embodiment, silicon rubber is used as the adhesive material for binding the separator plates of the single cell **10.** Preferably, the silicon rubber is selected from material which has non-corrosive electronic grade and can be cured under moisture or heat.

According to experimental and practical experiences, in the event that the silicon rubber made of heat-cured material is utilized for the manufacture of the single cell, the silicon rubber generally has a heat-cured temperature of 100-140°C. Because the curing temperature of the silicon rubber is higher than the working temperature (lower than 100°C) of PEMFC, the silicon rubber is stable and can perform an optimal after-cured effect thereof. Preferably, to provide an optimal sealing and positioning effect, the viscosity of the silicon rubber utilized is greater than 150,000 centi-poise. Furthermore, the silicon rubber having a dielectric strength ranging from 15-20 V/mil would sufficiently perform a considerable electricity resistance. Nevertheless, the above-mentioned values are proposed for people skilled in this field to implement the present invention under a preferred situation. It dos not mean that any values going beyond the proposed ranges cannot perform well the expected functions as set forth therein.

In practical application, one can assemble a plurality of single cells as mentioned above and superimpose them onto one another to form a cell module for performing high power output.

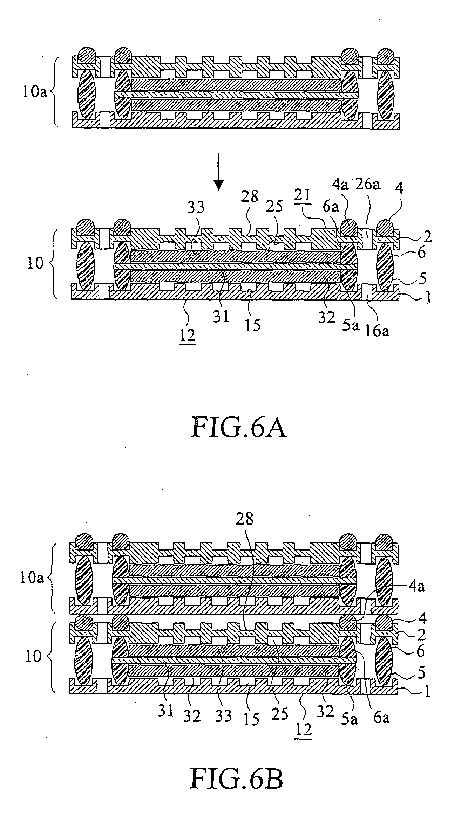

**Fig. 6a** shows a cross-sectional view of a second embodiment of the present invention, in which two single cells are superimposed to form a fuel cell module. Two modulized single cells **10, 10a** are formed in accordance with the technology as mentioned. Please refer to **Fig. 6B****.** The single cells **10, 10a** are then stacked together, such that the anode plate **1** at the bottom of the second single cell **10a** is superimposed on the top of the cathode plate **2** of the first single cell **10.** Accordingly, the plane structure of the second surface of the anode plate of the second single cell **10a** forms the top surface of the coolant channels on the first surface **21** of the cathode plate **2,** providing a passage for coolant flowing therethrough. By means of the silicon rubbers **4, 4a** which are previously applied at the first surface **21** of the cathode plate **2** of the first single cell **10** and by compressing the two modulized single cells **10, 10a** with a predetermined compression pressure, the two single cells **10, 10a** are stably bound together and the coolant channels **28** are tightly sealed.

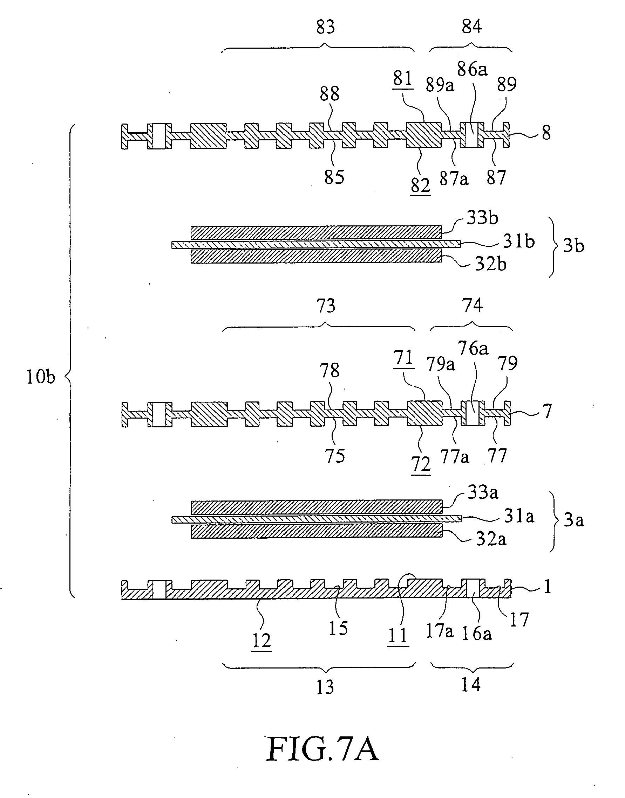

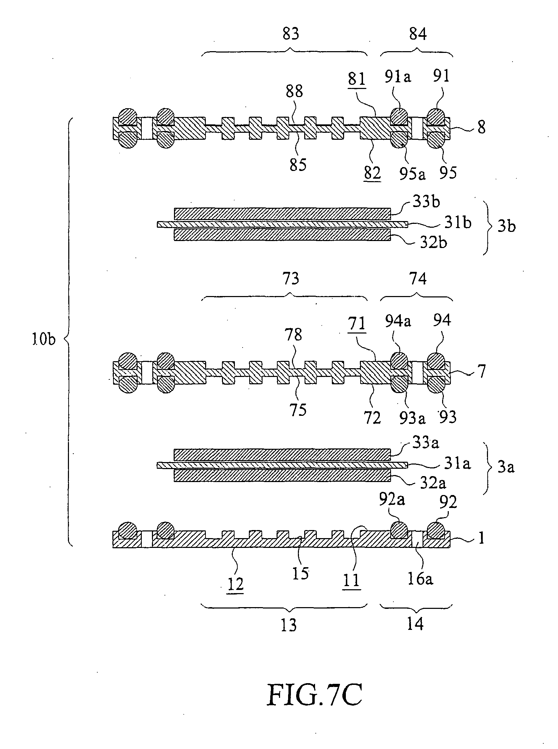

**Fig. 7A** is a cross-sectional view showing the cell module constructed in accordance with a third embodiment of the present invention. In the example shown, the cell module comprises two MEAs, one bipolar plate, an anode plate and a cathode plate. Similar reference numerals are used to identify elements that are similar or identical as that in **Figs. 5A** to **5D****.**

In this embodiment, the cell module **10b** comprises an anode plate **1,** a bipolar plate **7** and a first MEA **3a.** The anode plate **1** has a first surface **11,** a second surface **12,** a central portion **13,** a circumferential portion **14,** a plurality of anode gas channels **15,** a peripheral groove **17,** an extended groove **17a,** and a plurality of ports. The bipolar plate **7** comprises a first surface **71,** a second surface **72,** a central portion **73,** a peripheral portion **74,** a plurality of cathode gas channels **75,** a peripheral groove **77,** an extended groove **77a,** a peripheral groove **79,** an extended groove **79a,** and a plurality of ports. Furthermore, the first surface **71** of the central portion **73** is formed with a plurality of anode gas channels **78** for anode gas flowing therethrough. The first MEA **3a** comprises a proton exchange membrane **31a,** an anode gas diffusion layer **32a** and a cathode gas diffusion layer **33a.**

A second MEA **3b** is stacked on the first surface **71** of the bipolar plate **7.** The second MEA **3b** comprises a proton exchange membrane **31b,** an anode gas diffusion layer **32b** and a cathode gas diffusion layer **33b,** in which the anode gas diffusion layer **32b** of the second MEA **3b** is superimposed on the central portion **73** at the first surface **71** of the bipolar plate **7.** A cathode plate **8** is then stacked on the top of the anode gas diffusion layer **33b** of the second MEA **3b.**

The cathode plate **8** includes a first surface **81,** a second surface **82,** a central portion **83,** a circumferential portion **84,** a plurality of cathode gas channels **85,** a peripheral groove **87** and an extended groove **87a** formed at the second surface **82,** a peripheral groove **89** and an extended groove **89a** formed at the first surface **81** and a plurality of ports. Also, a plurality of coolant channels **88** are formed at the first surface **81** of the central portion **83** of the cathode plate **8** for coolant flowing therethrough.

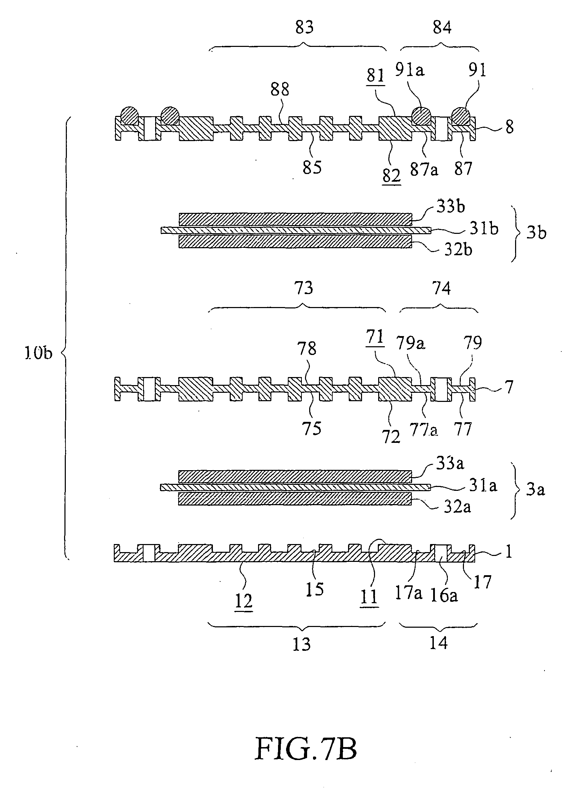

In the manufacture of the cell module **10b,** the peripheral groove **89** and extended groove **89a** at the first surface **81** of the circumferential portion **84** are dispensed with silicon rubbers **91, 91a,** as shown in **Fig. 7B****.** The silicon rubbers **91, 91a** are cured.

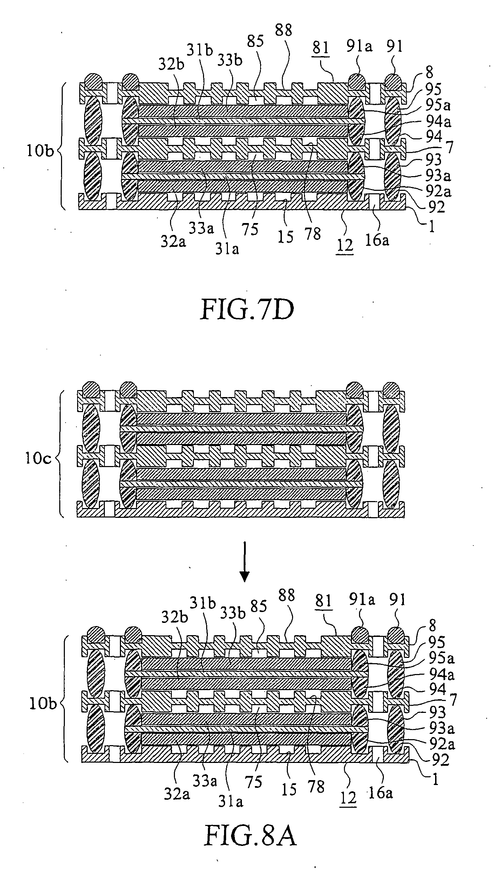

Then, the peripheral groove **17** and extended groove **17a** of the anode plate **1** are applied with silicon rubbers **92, 92a.** Similarly, the peripheral grooves **77, 79** and extended grooves **77a, 79a** of the bipolar plate **7** and the peripheral groove **87** and extended groove **87a** of the cathode plate **8** are respectively applied with silicon rubbers **93, 94, 93a, 94a, 95, 95a.** Before the silicon rubbers are cured, the anode plate **1,** first MEA **3a,** bipolar plate **7,** second MEA **3b,** and cathode plate **8** are precisely stacked in proper order and compressed with a predetermined compression pressure, as shown in **Fig. 7D****.** The silicon rubbers **92, 93, 94, 95** on each plate stick to the corresponding silicon rubbers at the opposing surface and is cured to form a tight sealing. The sealing tightly seal the circumferential portions among the anode plate **1,** bipolar plate **7** and cathode plate **8.** Besides, the silicon rubbers **92a, 93a** correspondingly stick to the proton exchange membrane **31a** of the first MEA **3a** and the silicon rubbers **94a, 95a** correspondingly stick to the proton exchange membrane **31b** of the second MEA **3b,** such that the first and second MEA **3a, 3b** are stably anchored in position and sealings are formed around the ports between adjacent plates. Hence, an integrated modularized cell module **10b** is formed.

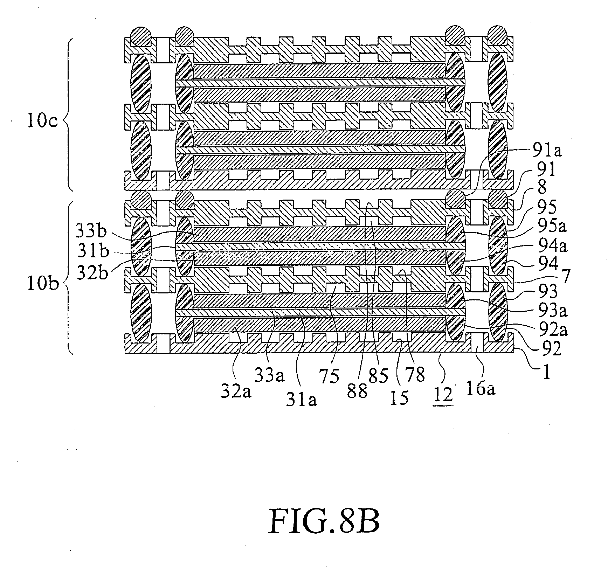

**Figs. 8A** to **8B** are cross-sectional views showing the stacking of two cell modules of **Fig. 7D** to form a fuel cell stack in accordance with a fourth embodiment of the present invention. In assembly, two cell modules **10b, 10c** manufactured by the technology are stacked together in series, such that the second surface of the anode plate of the cell module **10c** is superimposed on the first surface of the cathode plate of cell module **10b,** as shown in **Fig. 8b****.** Accordingly, the flat structure of the second surface of the anode plate of cell module **10c** forms the top surface of the coolant channels on the first surface of the cathode plate **8.** By means of the silicon rubbers **91, 91a** applied at the first surface of the cathode plate 8 of the cell module **10b,** and by compressing the two cell modules **10b, 10c** with a predetermined compression pressure, the two cell modules are bound together, forming a tight structure. Hence, the coolant channels are tightly sealed for flowing of coolant therethrough.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A sealing structure for sealing a fuel cell module (10b), comprising:
at least a first membrane electrode assembly (3a) and at least a second membrane electrode assembly (3b), each membrane electrode assembly (3a, 3b) including an anode side with an anode gas diffusion layer (32a, 32b), a cathode side with a cathode gas diffusion layer (33a, 33b), and at least a proton exchange membrane (31 a, 31b) mounted between the anode gas diffusion layer (32a, 32b) and the cathode gas diffusion layer (33a, 33b);
at least one bipolar plate (7), sandwiched between the membrane electrode assemblies (3a, 3b), the bipolar plate (7) including a first surface (71), a second surface (72), a central portion (73), a circumferential portion (74) and a plurality of ports (76a) formed at the circumferential portion (74), in which the first surface (71) of the central portion (73) is formed with a plurality of anode gas channels (78) and the second surface (72) of the central portion (73) is formed with a plurality of cathode gas channels (75); and the circumferential portions (74) of the first surface (71) and second surface (72) are formed with a peripheral groove (79,77) and an extended groove (79a, 77a) around the ports (76a) in communication with the peripheral groove (79, 77);
an anode plate (1) mounted to the anode gas diffusion layer (32a) of the first membrane electrode assembly (3a), which comprises a first surface (11) facing to the anode gas diffusion layer (32a) of the first membrane electrode assembly (3a), a central portion (13), a circumferential portion (14) and a plurality of ports (16a) formed at the circumferential portion (14), in which the first surface (11) is formed with a plurality of anode gas channels (15) at the central portion (13), a peripheral groove (17) at the circumferential portion (14) and an extended groove (17a) around the ports (16a) in communication with the peripheral groove (17); and
a cathode plate (8) mounted to the cathode gas diffusion layer (33b) of the second membrane electrode assembly (3b), which comprises a first surface (81), a second surface (82) facing to the cathode gas diffusion layer (33b) of the second membrane electrode assembly (3b), a central portion (83), a circumferential portion (84) and a plurality of ports (86a) formed at the circumferential portion (84), in which the second surface (82) is formed with a plurality of cathode gas channels (85) at the central portion (83), a peripheral groove (87) at the circumferential portion (84) and an extended groove (87a) around the ports (86a) in communication with the peripheral groove (87); **characterized in that**
silicone rubbers (92) at the peripheral groove (17) on the first side (11) of the anode plate (1) binds correspondingly to silicone rubbers (93) at the peripheral groove (77) on the second side (72) of the bipolar plate (7) to form a tight seal at the circumferential portions (14, 74) between the anode plate (1) and the bipolar plate (7), and the proton exchange membrane (31a) of the membrane electrode assembly (3a) has an entire periphery thereof tightly sandwiched between and surrounded by the silicone rubber (92a) at the extended groove (17a) of the anode plate (1) and the silicone rubber (93a) at the extended groove (77a) of the bipolar plate (7) to form a tight seal around the ports (16a,76a) between the anode plate (1) and the bipolar plate (7); and
silicone rubbers (95) at the peripheral groove (87) on the second side (82) of the cathode plate (8) binds correspondingly to silicone rubbers (94) at the peripheral groove (79) on the first side (71) of the bipolar plate (7) to form a tight seal at the circumferential portions (74,84) between the cathode plate (8) and the bipolar plate (7), and the proton exchange membrane (31b) of the second membrane electrode assembly (3b) has an entire periphery thereof tightly sandwiched between and surrounded by the silicone rubber (95a) at the extended groove (87a) of the cathode plate (8) and the silicone rubber (94a) at the extended groove (79a) of the bipolar plate (7) to form a tight seal around the ports (76a, 86a) between the cathode plate (8) and the bipolar plate (7).

2. The fuel cell module as claimed in Claim 1, **characterized in that** the first surface (81) of the cathode plate (8) further comprises a plurality of coolant channels (88) thereon.

3. The fuel cell module as claimed in Claim 1, **characterized in that** the second surface (12) of the anode plate (1) has a flat structure.
